Europäisches Patentamt

(19) European Patent Office

Office européen des brevets

(11) Publication number: **0 021 790**

**A1**

(12) **EUROPEAN PATENT APPLICATION**

(21) Application number: **80302060.1**

(22) Date of filing: **18.06.80**

(51) Int. Cl.³: **F 03 D 3/06**

(30) Priority: **19.06.79 GB 7921252**
**19.06.79 GB 7921253**

(43) Date of publication of application:
**07.01.81 Bulletin 81/1**

(84) Designated Contracting States:
**CH DE FR GB LI NL SE**

(71) Applicant: **Evans, Frederick Charles**
**Physics Department University of St.Andrews North**
**Haugh**
**St.Andrews Fife KY16 9SS(GB)**

(72) Inventor: **Evans, Frederick Charles**
**Physics Department University of St.Andrews North**
**Haugh**
**St.Andrews Fife KY16 9SS(GB)**

(74) Representative: **Arthur, Bryan Edward et al,**
**Withers & Rogers 4 Dyer's Buildings Holborn**
**London EC1N 2JT(GB)**

(54) **Vertical-axis windmills and turbines.**

㊵ In a vertical axis windmill, pivoted blades (1) are interconnected through links (6) connected to a central displaceable junction (7) so that a change in pitch of one blade affects the pitch of other blades. Movement of the junction is controlled by means (8) tending to return it towards the axis of the windmill. The efficiency of blade-type windmills may also be improved by augmenting aerodynamic surfaces arranged at or near the ends of the blades.

FIG. 3

- 1 -

## VERTICAL AXIS WINDMILLS AND TURBINES

This invention relates to improved methods of construction of vertical axis windmills in which the pitch of the blades is varied by the force of the wind. It is also applicable to any turbine, whether working in air or another fluid, provided the general configuration is similar to that of a windmill in which the axis of rotation is vertical and substantially at right angles to the direction of flow of the fluid.

French Patent specification No.530231 describes a vertical axis windmill in which the pitch of the blades is varied by the force of the wind. According to that specification, the variation in the pitch of each blade is controlled independently of the others by a spring connecting a stub arm on the blade to the hub of the rotor. With this arrangement, the spring is extended as the pitch angle of the blade departs from zero under the pressure of wind on the blade and, consequently, it provides a restraining counter force. Each blade is also provided with a mass balance to counter the effect of centrifugal force on the blade.

I have discovered that the efficiency of such windmills and similar turbines can be improved.

In one form of the invention, the efficiency

- 2 -

of a vertical-axis windmill or turbine having a rotor carrying a plurality of pivotted blades the pitch of which can be varied by the force of the wind or other working fluid is improved when

the blades are interconnected by means of links radiating from a central junction which is displaceable through a controlled range from the axis of the rotor,

the outer end of each link being pivotally connected to a blade at a point, the same for each blade, which is offset from the pivot axis of the blade,

so that a change in pitch of one blade displaces the junction and consequently affects the pitch of the other blades.

The links may take the form of rods or wires radiating from a junction on or near the axis of rotation of the windmill. The position of the junction is not fixed but its movement is controlled by a spring or other controlling device as later described.

As the windmill rotates, all the blades will normally tend to pivot on their individual axes under the influence of centrifugal force but by the interlinking of the individual blades, independent pivotting is prevented. In effect the blades all act as mutual counterweights for each other. In this way the need for a mass counter balance on each blade, and the consequent increase in weight of the rotating parts of the windmill, is avoided.

A further advantage is that the pivot points for the blades need not coincide with the centre-line of the section of the blades, since the tendency for aero-

dynamic drag to cause unwanted components of force tending to pivot the blades will be neutralised by the interlink; this means that the blades can be made stronger since the pivot bearings can be external if required.

A further advantage is that the instantaneous pitch angles of all the blades are inter-dependent, so there is an averaging effect which will tend to overcome any tendency to oscillation or other undesirable movements such as are sometimes found in machines with individual pitch controls for each blade.

However, the use of the interconnecting links described in this specification is not incompatible with additional individual pitch controls and counterweights, and it may be desirable for some applications to use a combined system.

In my constructions pivotting due to the force of the wind can still occur because all blades will experience a force due to the wind in substantially the same direction, i.e. downwind, as a consequence of which the junction of the links will be displaced in the downwind direction to an extent determined by the wind speed and by the control device. In steady wind conditions the junction will remain approximately stationary at a point downwind of the axis of rotation, and each blade will experience a cyclic variation of pitch as the windmill rotates. Individual control springs or other control devices for each blade are thus no longer necessary. The controlling effect of the system of links on the pitch of the blades will be rather similar to that of a cam or

- 4 -

eccentric such as has previously been proposed in other machines but the interlink has the advantage that the whole assembly rotates as one. The principle of operation is also different from those machines in that the force causing the blades to pivot is directly due to the wind. A further advantage of the interlinked blades is that the wind vane used in the other machines to orientate the cam or eccentric relative to the direction of the wind is not required.

The invention may be further understood by reference to Figures 1 to 5 of the accompanying drawings which show:

Fig. 1 - a part plan view of one embodiment of the invention;

Fig. 2 - a part vertical view of the windmill shown in Fig. 1;

Fig. 3 - a plan view of the windmill showing the blades in the deflected condition; and

Figs. 4 and 5 - alternative types of control device for the junction.

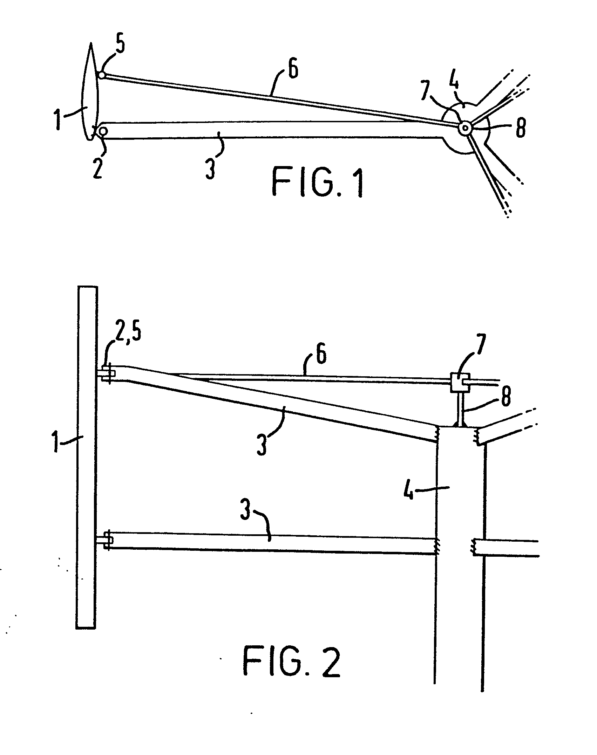

Figures 1 and 2 show by way of example a plan view of part of a windmill in which a blade (1) is connected by means of pivot (2) to supporting arm (3) which radiates from a central rotor shaft (4). The centre-line of the shaft (4) of the rotor is the axis of rotation of the windmill. The blade (1) is also connected by means of a pivot (5) to a link (6) which is joined to all the other links at a junction (7). The position of the junction relative to the axis of the rotor is controlled by a spring (8) in the form of a vertical flexible rod connected between the shaft (4) and junction (7).

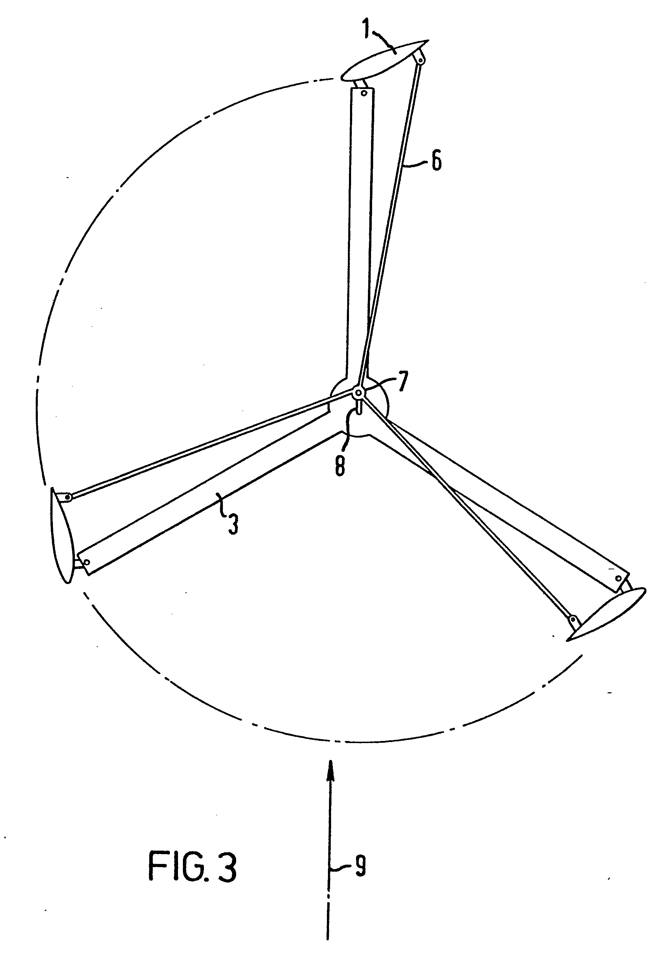

In Figures 1 and 2 the blade is shown in the undeflected, or zero-pitch position. Figure 3 shows in plan a rotor of a windmill carrying three blades (1) and three links (6), the latter being interlinked at junction (7), the blades are being deflected by the wind, the direction of the wind being indicated by an arrow (9). All blades have their trailing edges deflected downwind, with the result that the junction (7) is displaced downwind of the axis of rotation as shown, to an extent controlled by the strength of the spring (8). As the windmill rotates the position of the junction will remain approximately constant, and as the rotor turns the variation of pitch angle with angular position for each blade of the windmill will be approximately sinusoidal. The small angular flexure of the links at the junction can be accommodated by making the links flexible, or by providing bearings or pivots at the inner end of each link.

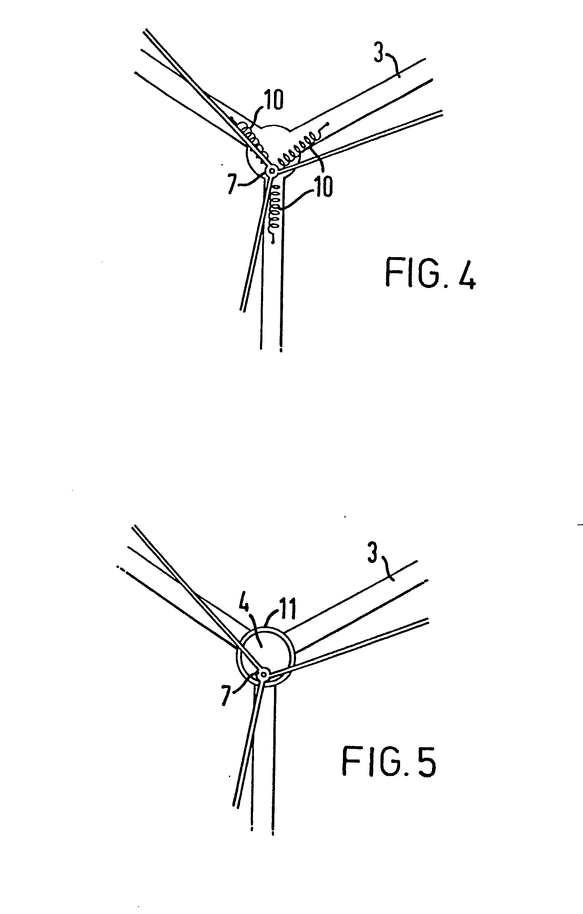

Figure 4 illustrates an alternative means of controlling the displacement of the junction (7) in which the flexible rod (8) of Figure 2 is replaced by an arrangement of three springs (10) each of which is connected at the inner end to the junction (7) and at the outer end to one of the arms (3) of the rotor. The springs may be replaced by other means, e.g. rubber, pneumatic cylinders or pivoted counterweight.

In the embodiment shown in Figure 5, the displacement of the junction (7) is limited by a ring (11) mounted on the arms (3) concentrically with the axis of rotation of shaft (4) and inside which a downward projection from junction (7) engages. In an alternative arrangement the ring may be mounted on the junction in a plane normal to the axis of the rotor, displacement of the junction being limited by an axial projection on the rotor engaging within the ring.

In general, the junction position can be determined by a restraining force or means, optionally in combination with a damping force or means. Damping may involve sliding friction between surfaces, or hydraulic or pneumatic devices involving flow of a fluid through a restricted aperture.

In another embodiment of the invention, the links incorporate a protective device against over-speeding of the windmill, e.g. a device which, in excess of a predetermined speed, and consequently of a predetermined centrifugal force on the links, permits the links to extend and so allow further pivoting of all the blades. In this way, the driving force of the wind is reduced and the drag of the blades is increased so restraining the speed of revolution of the windmill. Such a device may be, for example, a preloaded spring incorporated in each of the links which can then extend when a predetermined centrifugal loading is reached.

The efficiency of a vertical windmill or turbine may also be improved by adding at each end of the blade an inclined aerodynamic surface. These aerodynamic surfaces are inclined to the plane normal to the axis of the blade, as explained below, in such a way as to increase the rate of mass flow through the windmill, or correspondingly orientated surfaces in the case of a turbine. These added aerodynamic surfaces, hereafter termed augmenters, will normally be at or near the upper and lower ends of the blades of the vertical windmill or turbine.

In the tangential plane of a windmill, which is defined here as a vertical plane which touches the cylindrical surface traced out by a blade during the course of its rotation about the vertical axis, the augmenters will be inclined with their leading edges towards one another, i.e. the upper one will have its leading edge inclined downwards and the lower one will have its leading edge inclined upwards.

In the radial plane, which is defined here as a vertical plane containing the axis of rotation and cutting one of the windmill blades, the augmenters on that blade will be inclined with their outermost edges towards one another, i. e. the upper one will slope downwards away from the axis of rotation and the lower one will slope upwards away from the axis of rotation.

Although these four directions of inclination appear at first sight to be pushing air away from the windmill, they are in fact the directions required for increase of mass flow.

Corresponding augmenters may also be used with any turbine in which the configuration is similar to a

vertical-axis windmill, i.e. where the direction of flow of the fluid is substantially at right angles to the axis of rotation.

The primary advantage of augmenters is to increase the power output from a machine of given size, by virtue of the increased rate of mass flow of the fluid through the rotor. A second advantage is their property of controlling the tip vortices formed at the ends of the blades, in order to modify the characteristics of the windmill as may be desired. A third advantage is the tendency of the augmenters to diminish the bending moments in the blades, thus improving the resistance of the windmill to accidental breakage.

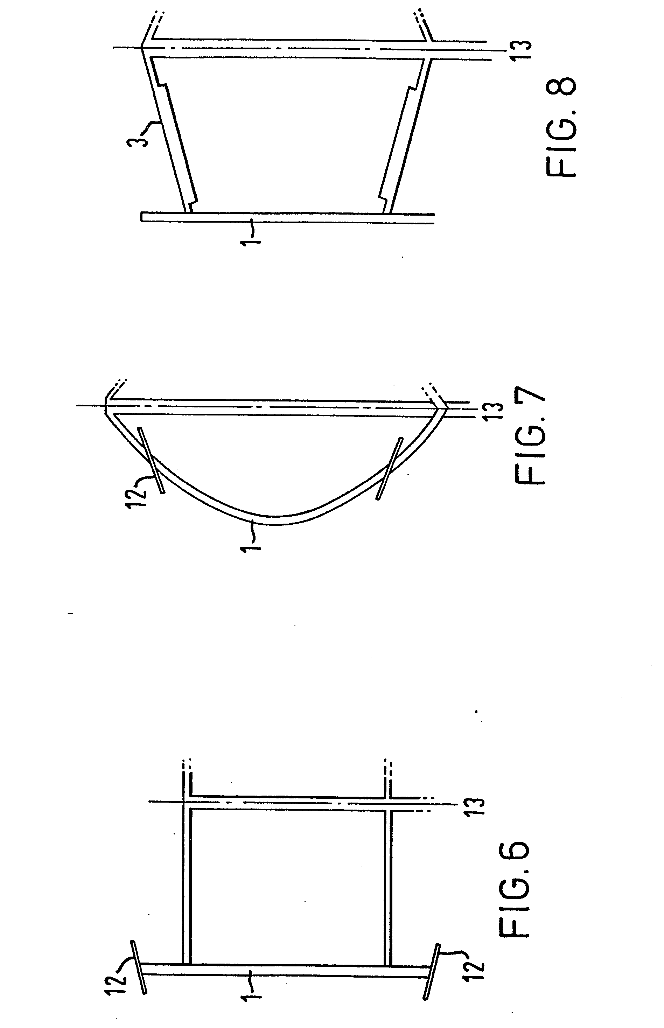

This aspect of the invention may be further understood by reference to Figures 6 to 11.

Of these, Figures 6 to 9 illustrate the inclination, in one of the planes referred to above, of augmenters of three different types.

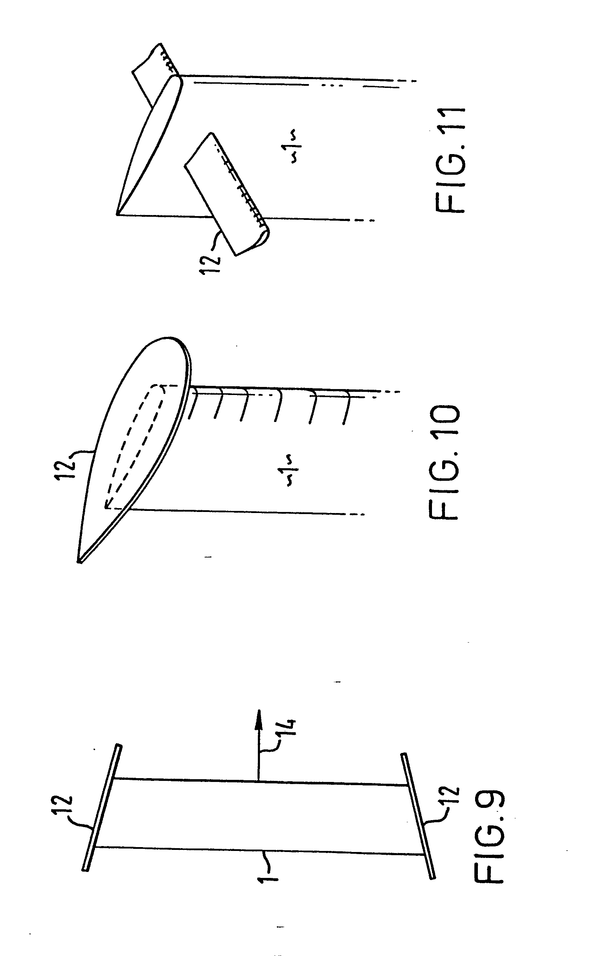

In these figures, a blade is indicated as before by (1), and an augmenter by (12). Figures 6 to 8 show the angle of inclination in the radial plane for three cases; in each case the axis of rotation is indicated by (13). In Figure 6 the blade (1) is of the straight variety, and may be either fixed pitch or variable pitch. In Figure 7 the blade (1) is of the Darrieus or "troposkien" type. In Figure 8 the supporting arms (3) for the blades are themselves so shaped and positioned as to function as augmenters. Figure 9 shows the direction of inclination of the augmenters (12) in the tangential plane, with the direction of movement of the blade indicated by (14). Figures 10 and 11 show two possible shapes for the agumenters. In Figure 10 the augmenter (12) resembles a conventional tip-vane with the addition of the two angles of inclination as described above; this will give a greater degree of control of the tip vortex and may be the best mode for the case where it is required to modify such characteristics as, for example, the shape of the curve relating power output with the ratio of blade speed to wind speed. In Figure 11 the augmenter (12) resembles a wing of high aspect ratio; this will give a high ratio of lift to drag in the augmenter itself, but less control of the tip vortex, and it may be the best mode where it is required to maximise power output regardless of other characteristics.

The angle of inclination of the augmenter in the tangential plane as described above should be between $5^{o}$ and $15^{o}$, preferably about $10^{o}$. The angle of inclination in the radial plane as described above should be between $30^{o}$ and $60^{o}$, preferably between $40^{o}$ and $50^{o}$.

Multiple augmenters, and other shapes of augmenter are also possible within the scope of this invention.

CLAIMS:

1.      A vertical axis windmill or turbine having a rotor carrying a plurality of pivotted blades the pitch of which can be varied by the force of the wind or other working fluid characterised in that

the blades are interconnected by means of links radiating from a central junction which is displaceable through a controlled range from the axis of the rotor,

the outer end of each link being pivotally connected to a blade at a point, the same for each blade, which is offset from the pivot axis of the blade,

so that a change in pitch of one blade displaces the junction and consequently affects the pitch of the other blades.

2.      A windmill or turbine as claimed in Claim 1 characterised in that the control of the displacement of the junction from the axis of the rotor is by resilient means which connect the junction to a pivot or points on the rotor and which tends to return the junction to the axis of the rotor.

3.      A windmill or turbine as claimed in Claim 1 characterised in that the displacement of the junction is controlled by a co-axial ring on the rotor within which the junction engages.

4.      A windmill or turbine as claimed in Claim 1 characterised in that displacement of the junction is controlled by a ring on the junction which is normal to the axis of the rotor and within which engates an axial projection on the rotor.

5.      A windmill or turbine as claimed in Claim 1, 2, 3 or 4 characterised in that the pivot axis of the blades is external of the blades.

6.      A windmill or turbine as claimed in any one of Claims 1 to 5 characterised in that the links are extendable when a predetermined centrifugal force is applied thereto.

7.      A vertical axis windmill or turbine having a rotor carrying a plurality of blades characterised in that each blade carries at or near the upper and lower ends an additional aerodynamic surface inclined to the plane normal to the blade in such manner that in each upper aerodynamic-surface the leading edge is lower than the trailing edge and the inner edge is higher than the outer edge, and in each lower aerodynamic surface the leading edge is higher than the trailing edge and the inner edge is lower than the outer edge.

8.      A windmill or turbine as claimed in Claim 7 characterised in that the aerodynamic surface is a tip vane.

9.      A windmill or turbine as claimed in Claim 7

- 3 -

characterised in that the aerodynamic surface is of high aspect ratio wing shape.

10. A windmill or turbine as claimed in Claim 7 characterised in that the aerodynamic surfaces are provided by radial arms supporting the blades.

0021790

FIG. 1

FIG. 2

0021790

FIG.3

FIG. 4

FIG. 5

FIG. 6

FIG. 7

FIG. 8

FIG.11

12

FIG.10

12

FIG.9

12

12

14

1

0021790

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 404 960 (AIR TURBINE COMPANY) <br> * Page 4, line 61 - page 5, line 65; abstract * <br> -- | 1,4,5 | F 03 D 3/06 |
| A | US - A - 1 835 018 (DARRIEUS) <br> * Page 1, lines 43-61 * <br> -- | 1 | |
| | US - A - 2 008 202 (HERTER) <br> * Page 1, line 110 - page 2, line 106 * <br> -- | 1 | TECHNICAL FIELDS SEARCHED (Int.Cl. 3) |
| | US - A - 3 918 839 (BLACKWELL) <br> * Column 7, lines 44-61 * <br> -- | 7 | F 03 D <br> F 03 B |
| | US - A - 4 093 402 (VAN HOLTEN) <br> * Column 3, line 20 - column 4, line 17 * <br> -- | 7-9 | |
| A | CA - A - 1 045 038 (CAMERON) | | CATEGORY OF CITED DOCUMENTS |
| A | US - A - 4 052 134 (RUMSEY) | | X: particularly relevant |
| A | US - A - 4 047 834 (MAGOVENY) <br><br> ---- | | A: technological background <br> O: non-written disclosure <br> P: intermediate document <br> T: theory or principle underlying the invention <br> E: conflicting application <br> D: document cited in the application <br> L: citation for other reasons |
| | | | &: member of the same patent family, corresponding document |

| | The present search report has been drawn up for all claims | | |
|---|---|---|---|
| Place of search | Date of completion of the search | Examiner | |
| The Hague | 02-09-1980 | DAVID | |

EPO Form 1503.1  06.78